# EUROPEAN PATENT SPECIFICATION

(11) **EP 4 303 037 B1**
(45) Date of publication and mention of the grant of the patent: **23.09.2026**
(21) Application number: 23180716.5
(22) Date of filing: 21.06.2023
(51) Int. Cl.: B60C 11/13, B60C 11/03, B60C 11/04

(54) **PNEUMATIC TIRE TREAD HAVING PROTRUDING SHAPE STRUCTURE IN GROOVE**
LUFTREIFENLAUFFLÄCHE MIT VORSTEHENDER FORMSTRUKTUR IN EINER RILLE
BANDE DE ROULEMENT DE PNEUMATIQUE AYANT UNE STRUCTURE DE FORME EN SAILLIE DANS UNE RAINURE

(30) Priority: 07.07.2022 KR 20220083495
(43) Date of publication of application: 10.01.2024
(73) Proprietor: Kumho Tire Co., Inc., Gwangju 62392 (KR)
(72) Inventor: Ahn, Hyoyul, 17076 Gyeonggi-do (KR)
(74) Representative: Hauck Patent- und Rechtsanwälte PartmbB

(56) References cited:
- EP-A1- 3 216 626
- WO-A1-2017/174928
- JP-A- 2011 245 996
- US-A1- 2011 277 897
- US-A1- 2018 170 116

## Description

The present invention has been completed on the basis of the results of the development and demonstration of a high-performance and high-durability tire for a light rail, which was carried out as a part of the high-performance and high-durability tire for a light rail and safety-enhanced health monitoring technology development project of the Korea Agency for Infrastructure Technology Advancement under the Ministry of Land, Infrastructure and Transport of the Republic of Korea, wherein the results were obtained by performing tasks from January 1, 2023 in Kumho Tire Co., Ltd. The contribution rate of Kumho Tire Co., Ltd. is 1/1(100%), and the task identification number is 1615013220, and the task number is 156026.

The present invention relates to a pneumatic tire tread having a protruding shape structure in a groove, and more particularly, to a cross-sectional shape of a groove in a pneumatic tire tread, which is capable of maintaining braking ability on a wet road surface and improving rolling resistance performance even if wear of the tire progresses, by forming protruding parts in such a way that a width of the groove is partially increased toward an inside from an outside in a radial direction of the tread.

Unless otherwise indicated herein, the contents described in this section are not prior art to the claims of the present application, and inclusion in this section is not admitted to be the prior art.

In the case of not only a general pneumatic tire but also a pneumatic tire for heavy duty used in buses and trucks, the tire includes shoulder portions, sidewalls and bead portions formed on both sides in a width direction of the tire with a tread part interposed therebetween while defining an internal space into which compressed air can be injected.

Among configurations of the above-described tire, the tread part corresponds to a rubber layer composed of grooves, blocks, and sipes, and serves to support the load of a vehicle body as the only portion of the tire which directly comes into contact with the ground. In addition, since the tread part continuously receives the load of the vehicle body, it is necessary to have strong friction performance, drainage performance, noise performance, and fatigue resistance, and sufficiently withstand an external impact applied thereto.

Here, the groove formed in the tread corresponds to a long groove dug in a circumferential direction of the tread, which is the driving direction of a vehicle, and is designed as a pattern to increase a drainage ability for safe braking on a rainy road.

In this regard, the wider the width of the groove, the better the driving performance on the rainy road, but if the width is excessively wide, the braking force and steering performance are deteriorated. Therefore, in order to enhance tire performances on a wet road surface, an optimized design of the groove and sipe for increasing the drainage ability and increasing grip and braking performances is continuously performed.

In addition, there is a difference between a rolling resistance and a wet grip performance (i.e., braking performance on the wet road) according to the wear of tire. At the beginning of wear, the wet grip performance is maintained intact due to the weight of the unworn tread and the presence of grooves in transverse/longitudinal directions. However, the wet grip performance is deteriorated toward the later stage of wear due to an absence of remaining grooves in the transverse/longitudinal directions and the weight reduction of the tire.

On the other hand, the rolling resistance performance, which has an inverse correlation with the wet grip performance, tends to be low at the beginning of wear and high at the later stage of wear.

US 20180170116 discloses a pneumatic vehicle tire for utility vehicles has a profiled tread having two circumferential ribs that are adjacent and are separated by a circumferential groove of depth H formed from radially inner and outer extension sections of height H1 and H2. The groove in the radially inner extension section is a channel of height H1 and breadth B1, and in the outer extension section is configured, along its circumferential extent, with an alternating sequence of first and second circumferential regions. The two flanks in the first regions are each configured, in the transition to the outer surface of the rib, with a chamfer of height H4 such that H4 < H2, and are spaced by a distance B2 along their radial extent in the outer extension section from radially inward to radially outward as far as the chamfer.

In consideration of the above-mentioned circumstances, it is an object of the present invention to provide a protruding shape structure in a groove of a pneumatic tire tread, which is capable of securing stiffness of a tread part in circumferential and transverse directions by properly setting the width, length and angle of the protrusion part in the groove considering wear of the tire at the beginning stage, and improving the rolling resistance performance by forming protruding parts in such a way that a width of the groove is partially increased toward an inside from an outside in a radial direction of the tread.

Another object of the present invention is to provide a tire tread structure with excellent wet grip performance by increasing drainage performance and eliminating a hydroplaning phenomenon which occurs as the wear of tire progresses.

The above objects of the invention are solved by a pneumatic tire according to claim one.

In addition, it is not limited to the technical problems as described above, and it is obvious that another technical problem may be derived from the following description.

To achieve the above objects, according to an aspect of the present invention, there is provided a pneumatic tire tread according to claim 1.

According to a preferred embodiment of the present invention, the protrusion part formed in the groove may be configured to have a ratio H1/H2 of a height H1 of the protrusion part to a total height H2 of the groove in a range of 0.25 to 0.75.

According to the present invention, a gap G between the pair of protrusion parts formed in the groove is at least 0.5 mm or more.

According to the present invention, the pair of protrusion parts formed in the groove includes convex portions and concave portions alternately arranged thereon in a center direction between gaps G, and discharge grooves are further formed in the convex portions.

According to a preferred embodiment of the present invention, the protrusion part formed in the groove may be configured to start at a point H3 of at least 0.5 mm from a surface of the tread.

According to a preferred embodiment of the present invention, the protrusion part formed in the groove may be configured to have an angle A formed by a central axis of the groove and the lower portion of the protrusion part in a range of 30° to 60°.

According to a preferred embodiment of the present invention, a ratio Li/Lo of a length Li of the protrusion part formed in the groove in a circumferential direction to a total length Lo of the groove including a non-protrusion part in the circumferential direction may be in a range of 0.4 to 0.8.

According to a preferred embodiment of the present invention, the at least one pair of protrusion parts may be formed in a laterally asymmetrical structure with respect to the central axis of the groove.

According to the present invention, it is possible to secure stiffness of the tread part in circumferential and transverse directions by properly setting the width, length and angle of the protrusion part in the groove considering wear of the tire at the beginning stage, and improve the rolling resistance performance by forming the protruding parts in such a way that a width of the groove is partially increased toward an inside from an outside in a radial direction of the tread.

In addition, according to the present invention, it is possible to improve wet grip performance by increasing drainage performance and eliminating a hydroplaning phenomenon which occurs as the wear of tire progresses.

The effects of the present invention are not limited to the above advantages, and those skilled in the art should understand that it includes all effects that may be deduced from the detailed description of the present invention or the configurations of the invention described in the claims.

The above and other objects, features and other advantages of the present invention will be more clearly understood from the following detailed description taken in conjunction with the accompanying drawings, in which:
FIG. 1 is a perspective view illustrating a pneumatic tire tread having a protruding shape structure in a groove according to an embodiment of the present invention;
FIG. 2 is a perspective view and a cross-sectional view of a three dimensional image illustrating a shape of the groove including a protrusion part in a tire tread structure according to an embodiment of the present invention;
FIG. 3 is cross-sectional views illustrating the tire tread structure according to an embodiment of the present invention;
FIG. 4 is plan views illustrating the tire tread structure according to an embodiment of the present invention; and
FIG. 5 is plan views illustrating tire tread structures as modified examples of the shape of the protrusion part in the groove according to an embodiment of the present invention.

### [DETAILED DESCRIPTION OF THE INVENTION]

Hereinafter, configurations, operations, and effects of a pneumatic tire tread having a protruding shape structure in a grove according to a preferred embodiment will be described with reference to the accompanying drawings.

For reference, in the drawings described below, each component is omitted or schematically illustrated for convenience and clarity, and the size of each component does not reflect an actual size. In addition, the same reference numerals are denoted to the same components throughout the specification, and reference numerals for the same components in individual drawings will be omitted.

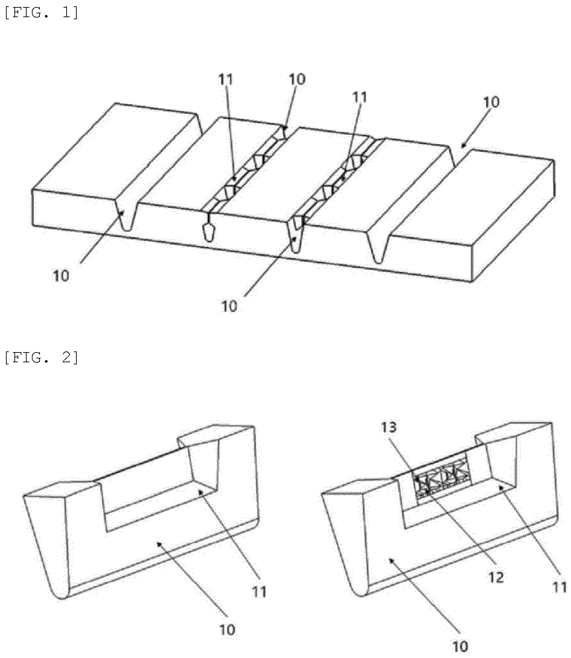

First, an embodiment of the present invention will be described with reference to FIGS. 1 and 2. A pneumatic tire tread having a protruding shape structure in the groove includes: a groove 10 structure having grooves formed in a circumferential direction of the tire; and at least one pair of protrusion parts 11 which are formed in an abutting form symmetrical vertically with respect to a central axis of the groove 10, wherein the protrusion parts 11 provided in the groove 10 are formed in such a way that a distance between lower portions thereof is increased toward an inside in a radial direction of the tread, thus to have the same shape as the groove 10 which does not have the protrusion part as wear thereof progresses.

As shown in FIGS. 1 and 2, it may have a structure in which at least one pair of the protrusion parts 11 in the groove 10 abut in the circumferential direction. The groove 10 and the protrusion part 11 play an important role in preventing a hydroplaning phenomenon from occurring by discharging water inflowing between the tire and the road surface during driving a vehicle on a rainy road and enhancing driving performance by increasing the gripping force.

Here, it is desirable that, as a gap G between the protrusion parts 11 is decreased, portions in contact with the ground during driving the tire abut while a gap between tread blocks (or ribs) is decreased due to a load, such that stiffness of the tread part may be maximally secured to improve the rolling resistance performance, and thereby reducing a strain energy of the tread part.

In this regard, Table 1 below shows results confirming the distribution of ground pressures under conditions of 50% and 100% of a maximum load of the tire.

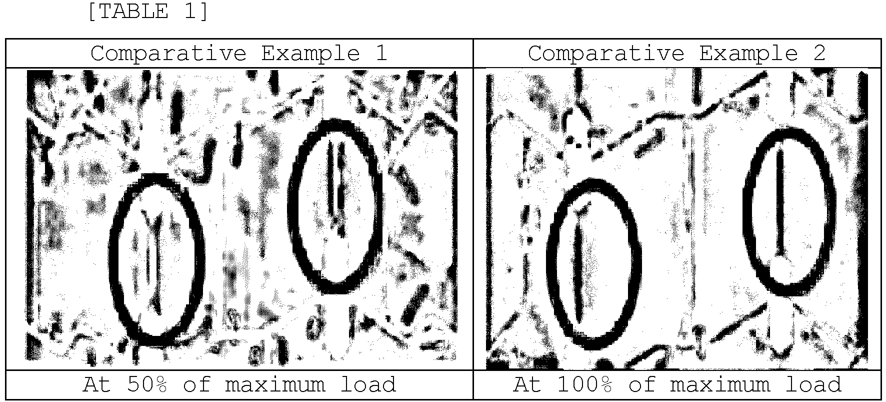

As contrasted in Comparative Examples 1 and 2 of Table 1, it can be seen that, the higher the maximum load of the tire, the more the protrusion parts 11 in contact with the ground abut as shown in Comparative Example 2.

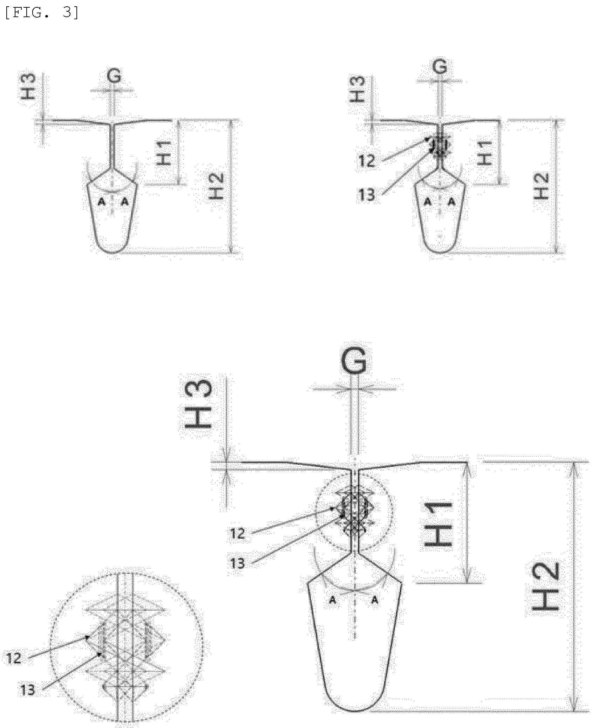

Here, a preferred characteristic of the present invention will be described with reference to FIG. 3. The protrusion part 11 formed in the groove 10 may be configured to have a ratio H1/H2 of a height H1 of the protrusion part 11 to a total height H2 of the groove 10 in a range of 0.25 to 0.75.

The above range is based on the test analysis results presented in Table 2.

**[TABLE 2]**

| Item | Comparati ve Example 3 | Experimen tal Example 1 | Experime ntal Example 2 | Experimen tal Example 3 | Experime ntal Example 4 |
|---|---|---|---|---|---|
| H1 | 0 | 4 | 8 | 12 | 16 |
| H2 | 16 | 16 | 16 | 16 | 16 |
| H1/H2 | 0 | 0.25 | 0.5 | 0.75 | 1 |
| Strain energy | 319% | 100% | 102% | 104% | 106% |
| Rolling resistan ce performa nce | 94% | 100% | 98% | 97% | 95% |
| Wet grip performa nce | 94% | 100% | 100% | 100% | 99% |

Table 2 above shows results of evaluating the strain energy and rolling resistance performance according to the ratio of the height H1 of the protrusion part 11 to the total height H2 of the groove 10 in a radial direction of the tire. Referring to Table 2 above, it can be seen that, the smaller the value of the strain energy, the higher the value of the rolling resistance performance, and the higher the value of the wet grip performance, the better the results.

As tested and analyzed in Table 2 above, Comparative Example 3 in which the ratio of H1/H2 is 0 without the protrusion part 11 in the groove 10 exhibits a strain energy increased by 319%. In comparison, Experimental Examples 1 to 3 which have the protrusion part 11 in the groove 10 exhibit a strain energy of 100% to 104%, respectively, therefore it can be seen that the strain energy is rapidly reduced within the range where the protrusion part 11 is provided.

In addition, as tested and analyzed in Table 2 above, it can be seen that the tires have excellent rolling resistance performance of 97% to 100% when the ratio of H1/H2 is within the range of 0.25 to 0.75, respectively.

Further, as tested and analyzed in Table 2 above, it can be seen that the tires have excellent wet grip performance of 100% when the ratio of H1/H2 is within in the range of 0.25 to 0.75, respectively.

Meanwhile, the protrusion part 11 in the groove 10 may extend in the radial direction while maintaining a constant length. In a pneumatic tire tread according to an embodiment of the invention the distance between the lower portions thereof is increased toward to the inside in the radial direction of the tread from the surface thereof, thus to have the same shape as the original groove 10 which does not have the protrusion part as wear thereof progresses.

Due to the grooves 10 and protrusion parts 11 formed as described above, loss of braking force on the wet road may be reduced even at the later stage of wear.

The gap G between the pair of protrusion parts 11 formed in the groove 10 is at least 0.5 mm or more.

Further, another preferred characteristic of the present invention will be described with reference to FIG. 3. The protrusion part formed in the groove may be configured to start at a point H3 of at least 0.5 mm from the surface of the tread.

As described above, it is preferable that the gap G between the pair of abutting protrusion parts 11 is at least 0.5 mm, and the starting point H3 is at least 0.5 mm from the surface of the tread, which are applied with a minimum thickness necessary to prepare a mold when molding the tire, and are intended to easily manufacture a mold and prevent strain energy generated from the protrusion parts 11 when the tire is pulled out of the mold after vulcanization.

Further, another characteristic of the present invention will be described with reference to FIGS. 2 and 3. The pair of protrusion parts 11 formed in the groove 10 include convex portions 12 and concave portions 12' alternately arranged thereon in a center direction between the gaps G, and discharge grooves 13 are further formed in the convex portions 12.

The reason for the configuration as described above is to reduce loss of the strain energy in the tread part by minimizing the movement of the tread part and maximizing the stiffness of the tread part, as well as, by forming the discharge groove 13 in the convex portion 12, it is possible to more effectively prevent foreign matter from being caught between the gaps of the protrusion parts 11.

Further, another preferred characteristic of the present invention will be described with reference to FIG. 3. The protrusion part 11 formed in the groove 10 may be configured to have an angle A formed by a central axis of the groove 10 and the lower portion of the protrusion part 11 in a range of 30° to 60°.

The reason for the configuration as described above is to easily manufacture a mold during molding the tire and prevent the strain energy generated from the protrusion parts 11 when the tire is pulled out of the mold after vulcanization.

Table 3 below shows results of evaluating the strain energy according to the angle A formed by the central axis of the groove 10 of the protrusion part 11 and the lower portion of the protrusion part 11.

**[TABLE 3]**

| Item | Comparat ive Example 4 | Experime ntal Example 5 | Experime ntal Example 6 | Experime ntal Example 7 | Comparat ive Example 5 |
|---|---|---|---|---|---|
| Angle A | 15 | 30 | 45 | 60 | 90 |
| Strain energy | 105% | 100% | 101% | 100% | 110% |

As tested and analyzed in Table 3 above, the smaller the value of the strain energy, the better the results. It can be seen that, Experimental Examples 5 to 7 in which the angle A is 30° to 60° show strain energy of 100 to 101%, respectively, when the angle A is limited to the above range, as well as it is analyzed that the strain energy is reduced within the corresponding angular range.

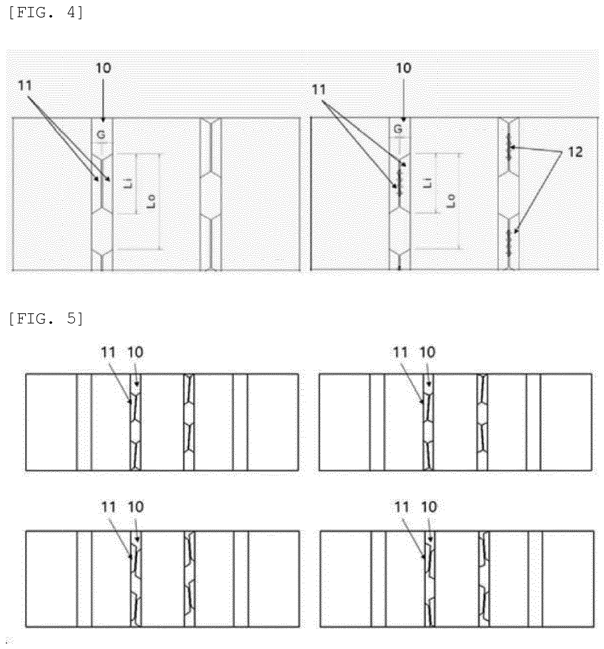

Furthermore, another preferred characteristic of the present invention will be described with reference to FIG. 4. A ratio Li/Lo of a length Li of the protrusion part 11 formed in the groove 10 in a circumferential direction to a total length Lo of the groove including a non-protrusion part in the circumferential direction may be in a range of 0.4 to 0.8.

The reason for the configuration as described above is that, when the ratio Li/Lo is 0.4 or less, the length Li of the tire protrusion part 11 is small, such that the stiffness of the tread part at the beginning of wear cannot be secured to the maximum, and thereby causing a decrease in the rolling resistance performance.

On the other hand, when the ratio Li/Lo is 0.8 or more, the stiffness of the tread part can be secured to the maximum, but the drainage performance of the tire tread is rapidly decreased and the braking performance at the beginning of wear is decreased.

Furthermore, another preferred characteristic of the present invention will be described with reference to FIG. 5. The at least one pair of abutting protrusion parts 11 may be formed in a laterally asymmetrical structure with respect to the central axis of the groove 10.

Although preferred embodiments of the present invention have been described with reference to the accompanying drawings, it is clear that the above-described embodiments are illustrative in all aspects and do not limit the present invention. The scope of the present invention is defined by the following claims rather than by the detailed description of the embodiment.

### [Description of Reference Numerals]

- 10:: Groove
- 11:: Protrusion part
- 12, 12':: Convex portion, concave portion
- 13:: Discharge groove
- A:: Angle of protrusion part
- G:: Gap between protrusion parts
- H1:: Length of radial protrusion part
- H2:: Overall length of radial groove
- H3:: Start point of protrusion part
- Li:: Length of protrusion part in circumferential direction
- Lo:: Length of groove in circumferential direction

## Claims

1. A pneumatic tire tread having a protruding shape structure in a groove, the pneumatic tire tread comprising:
a groove structure having grooves (10) formed in a circumferential direction of the tire; and
at least one pair of protrusion parts (11, 11) provided in one of the grooves (11), wherein the protrusion parts are formed symmetrical vertically with respect to a central axis of the groove and which are abutting in a loaded state of the tire,
wherein the protrusion parts provided in the groove are formed in such a way that a distance between lower portions thereof is increased toward an inside in a radial direction of the tread, thus to have the same shape as the groove which does not have the protrusion part as wear thereof progresses,
a gap (G) between the pair of protrusion parts formed in the groove is at least 0.5 mm or more and
wherein the pair of protrusion parts (11, 11) formed in the one of the grooves (11) includes convex portions (12) and concave portions (12') alternately arranged thereon in a center direction between the gap (G), and discharge grooves are further formed in the convex portions (12).

2. The pneumatic tire tread according to claim 1, wherein the protrusion part formed in the groove is configured to have a ratio H1/H2 of a height H1 of the protrusion part to a total height H2 of the groove in a range of 0.25 to 0.75.

3. The pneumatic tire tread according to claim 1, wherein the protrusion part formed in the groove is configured to start at a point H3 of at least 0.5 mm from a surface of the tread.

4. The pneumatic tire tread according to claim 1, wherein the protrusion part formed in the groove is configured to have an angle A formed by a central axis of the groove and the lower portion of the protrusion part in a range of 30° to 60°.

5. The pneumatic tire tread according to claim 1, wherein a ratio Li/Lo of a length Li of the protrusion part formed in the groove in a circumferential direction to a total length Lo of the groove including a non-protrusion part in the circumferential direction is in a range of 0.4 to 0.8.

6. The pneumatic tire tread according to claim 1, wherein the at least one pair of abutting protrusion parts are formed in a laterally asymmetrical structure with respect to the central axis of the groove.

## Patentansprüche

1. Luftreifenlauffläche, die eine vorstehende Formstruktur in einer Nut aufweist, wobei die Luftreifenlauffläche umfasst:
eine Nutstruktur, die Nuten (10) aufweist, die in einer Umfangsrichtung des Reifens gebildet sind; und
mindestens ein Paar von Vorsprungsteilen (11, 11), die in einer der Nuten (11) vorgesehen sind, wobei die Vorsprungsteile vertikal symmetrisch in Bezug auf eine Mittelachse der Nut gebildet sind, und die in einem belasteten Zustand des Reifens anliegen,
wobei die Vorsprungsteile, die in der Nut vorgesehen sind, derart gebildet sind, dass ein Abstand zwischen unteren Abschnitten derselben hin zu einer Innenseite in einer radialen Richtung der Lauffläche zunimmt, sodass sie bei fortschreitendem Verschleiß derselben die gleiche Form wie die Nut aufweisen, die den Vorsprungsteil nicht aufweist,
eine Lücke (G) zwischen dem Paar von Vorsprungsteilen, die in der Nut gebildet sind, mindestens 0,5 mm oder mehr beträgt, und
wobei das Paar von Vorsprungsteilen (11, 11), die in der einen der Nuten (11) gebildet sind, konvexe Abschnitte (12) und konkave Abschnitte (12') umfasst, die abwechselnd darauf in einer Mittelrichtung zwischen der Lücke (G) angebracht sind, und ferner Abfuhrnuten in den konvexen Abschnitten (12) gebildet sind.

2. Luftreifenlauffläche nach Anspruch 1, wobei der Vorsprungsteil, der in der Nut gebildet ist, derart ausgestaltet ist, dass er ein Verhältnis H1/H2 einer Höhe H1 des Vorsprungsteils zu einer Gesamthöhe H2 der Nut in einem Bereich von 0,25 bis 0,75 aufweist.

3. Luftreifenlauffläche nach Anspruch 1, wobei der Vorsprungsteil, der in der Nut gebildet ist, derart ausgestaltet ist, dass er an einem Punkt H3 von mindestens 0,5 mm von einer Fläche der Lauffläche beginnt.

4. Luftreifenlauffläche nach Anspruch 1, wobei der Vorsprungsteil, der in der Nut gebildet ist, derart ausgestaltet ist, dass er einen Winkel A aufweist, der von einer Mittelachse der Nut und dem unteren Abschnitt des Vorsprungsteils in einem Bereich von 30° bis 60° gebildet wird.

5. Luftreifenlauffläche nach Anspruch 1, wobei ein Verhältnis Li/Lo einer Länge Li des Vorsprungsteils, der in der Nut in einer Umfangsrichtung gebildet ist, zu einer Gesamtlänge Lo der Nut umfassend einen Nicht-Vorsprungsteil in der Umfangsrichtung in einem Bereich von 0,4 bis 0,8 liegt.

6. Luftreifenlauffläche nach Anspruch 1, wobei das mindestens eine Paar von anliegenden Vorsprungsteilen in einer seitlich asymmetrischen Struktur in Bezug auf die Mittelachse der Nut gebildet ist.

## Revendications

1. Bande de roulement de pneumatique ayant une structure de forme en saillie dans une rainure, la bande de roulement de pneumatique comprenant :
une structure de rainures comportant des rainures (10) formées dans une direction circonférentielle du pneu ; et
au moins une paire de parties en saillie (11, 11) ménagées dans une des rainures (11), dans laquelle les parties en saillie sont formées symétriquement verticalement par rapport à un axe central de la rainure et qui sont en butée dans un état chargé du pneu,
dans laquelle les parties en saillie ménagées dans la rainure sont formées de telle sorte qu'une distance entre des parties inférieures de celles-ci est augmentée vers une partie intérieure dans une direction radiale de la bande, de manière à présenter la même forme que la rainure ne comportant pas la partie en saillie, à mesure que l'usure de celles-ci progresse,
un espace (G) entre la paire de parties en saillie formées dans la rainure est d'au moins 0,5 mm ou plus et
dans laquelle la paire de parties en saillie (11, 11) formées dans l'une des rainures (11) comprend des parties convexes (12) et des parties concaves (12') agencées alternativement sur celle-ci dans une direction centrale entre l'espace (G), et des rainures de décharge sont en outre formées dans les parties convexes (12).

2. Bande de roulement de pneumatique selon la revendication 1, dans laquelle la partie en saillie formée dans la rainure est configurée pour présenter un rapport H1/H2 d'une hauteur H1 de la partie en saillie à une hauteur H2 totale de la rainure situé dans une plage de 0,25 à 0,75.

3. Bande de roulement de pneumatique selon la revendication 1, dans laquelle la partie en saillie formée dans la rainure est configurée pour démarrer à un point H3 d'au moins 0,5 mm depuis une surface de la bande de roulement.

4. Bande de roulement de pneumatique selon la revendication 1, dans laquelle la partie en saillie formée dans la rainure est configurée pour présenter un angle A, formé par un axe central de la rainure et la partie inférieure de la partie en saillie, compris dans une plage de 30° à 60°.

5. Bande de roulement de pneumatique selon la revendication 1, dans laquelle un rapport Li/Lo entre une longueur Li de la partie en saillie formée dans la rainure dans une direction circonférentielle et une longueur totale Lo de la rainure incluant une partie non saillante dans la direction circonférentielle se situe dans une plage de 0,4 à 0,8.

6. Bande de roulement de pneumatique selon la revendication 1, dans laquelle ladite au moins une paire de parties en saillie en butée est formée dans une structure latéralement asymétrique par rapport à l'axe central de la rainure.
